# EUROPEAN PATENT SPECIFICATION

(11) **EP 4 098 935 B1**
(45) Date of publication and mention of the grant of the patent: **03.04.2024**
(21) Application number: 22176326.1
(22) Date of filing: 31.05.2022
(51) Int. Cl.: F21S 43/14, F21S 43/15, F21S 43/239, F21S 43/241, F21S 43/243, F21S 43/249, F21S 43/20, F21S 43/31, B60Q 1/00, B60Q 1/28, B62J 6/022, B62J 6/026, F21W 107/17, F21W 103/55, F21W 103/10

(54) **LAMP UNIT AND LEANING VEHICLE**
LAMPENEINHEIT UND NEIGEFAHRZEUG
UNITÉ DE PHARE ET VÉHICULE INCLINABLE

(30) Priority: 31.05.2021 JP 2021090875
(43) Date of publication of application: 07.12.2022
(73) Proprietor: Yamaha Hatsudoki Kabushiki Kaisha, Iwata-shi, Shizuoka 438-8501 (JP)
(72) Inventor: SAGANE, Kazunari, Iwata-shi, Shizuoka, 438-8501 (JP); INOUE, Takehiro, Iwata-shi, Shizuoka, 438-8501 (JP)
(74) Representative: Stöckeler, Ferdinand

(56) References cited:
- EP-A1- 2 269 900
- CN-U- 211 600 570
- FR-A1- 3 008 775
- JP-A- 2015 049 977
- US-A1- 2015 219 303

## Description

### Technical Field

The present invention relates to a lamp unit and a leaning vehicle including the lamp unit.

### Background Art

Leaning vehicles, which are typified by motorcycles, each include a headlamp unit that illuminates an area ahead of the leaning vehicle. Some leaning vehicles include another lamp unit for a different purpose than the headlamp.

For example, Patent Literature (PTL) 1 discloses a lamp unit usable as a daytime running lamp. The daytime running lamp has a main function of providing better visibility of the vehicle to others. This lamp unit includes LEDs and a light guide disposed in front of the LEDs. The light guide is plate-shaped. The light guide includes a back surface that receives light from the LEDs and a front surface that emits the received light. As shown in FIG. 3 of PTL 1, the light guide has a configuration in which the light guide gradually widens in an up-down direction toward the front surface from the back surface to a specific location. In this configuration, the light guide gradually narrows in the up-down direction from the specific location to the front surface.

JP 2015 049977 A discloses a vehicle lighting appliance comprising a first light incident part of a rear face in a light guide body, which is divided into a plurality of divided regions within a horizontal plane. A cross section of each divided region along a vertical face parallel to an axial line of the region is set to a curved shape whose curvature is large as that in the divided region which is located in a portion in which a fore-and-aft length of the light guide body is short. Light incident from the first light incident part is made to directly reach a front face in each position in a horizontal direction at the rear face of the light guide body.

US 2015/0219303 A1 discloses a lighting apparatus, such as DRL, for a vehicle, such as motorbike, having a tubular light guide which converts light emitted from the light source into parallel light.

### Citation List

### Patent Literature

PTL 1: Japanese Patent Application Laid-Open Publication No. 2017-208192

### Summary of Invention

### Technical Problem

The present invention aims to provide a lamp unit that increases visibility of a leaning vehicle while suppressing upsizing of the lamp unit and an increase in the number of LEDs therein.

### Solution to the Problem

A light guide is provided to collect light emitted from an LED. For efficient light collection, it is desirable that light passing through the light guide be totally reflected at the interface between the light guide and the outside. In the light guide disclosed in PTL 1, the interface gradually widens in the up-down direction from the back surface to the specific location. This configuration helps to increase the incidence angle and facilitates the total reflection of light emitted from the LEDs at the interface. In contrast, the interface in this light guide gradually narrows in the up-down direction from the specific location to the front surface. In a light guide such as described above that has a structure in which the interface widens toward a halfway location, and then narrows therefrom, the interface has a sudden change in angle. Consequently, when light is reflected at a widening portion of the interface and then is incident on a narrowing portion of the interface, for example, the incidence angle tends to be small, which interferes with the total reflection. That is, light passing through the light guide easily escapes to the outside, and therefore it is difficult for the light to be collected efficiently.

A decrease in light collection efficiency leads to a decrease in luminous intensity of light to be emitted by the lamp unit, making it difficult to further increase the visibility of the vehicle to others. A possible solution to this problem is to increase the number of LEDs. However, an increase in the number of LEDs leads to an increase in size of a substrate to which the LEDs are attached and a control board for the LEDs, resulting in upsizing of the lamp unit.

The present inventor conducted studies to accomplish the above-described aim and found the following. With respect to the light guide disclosed in PTL 1, the present inventor considered increasing the distance from the front surface to the back surface of the light guide. As long as the distance from the front surface to the back surface is long, a larger incidence angle is easily achieved, and the decrease in light collection efficiency is suppressed even if the light guide includes a wider portion and a narrower portion in terms of the up-down direction. In this case however, the light guide is larger in size, resulting in upsizing of the lamp unit. The present inventor therefore thought that both a decrease in light collection efficiency and upsizing of the lamp unit would be suppressed if the light guide were not to include a widening portion. The present invention was completed based on such a finding.

(1) A lamp unit according to the present invention is for attachment to a front portion of a vehicle body of a leaning vehicle. The lamp unit includes a vehicle visibility lamp including an LED, an inner lens, and an outer cover. The LED emits light in such a direction that an optical axis of the light extends in a front direction of the leaning vehicle. The inner lens is disposed in front of the LED and collects the light while reflecting the light within the inner lens. The outer cover is configured to receive the light emitted in the front direction from the inner lens without aid of any reflectors, and transmit the light in the front direction. The outer cover having at least a portion that is disposed in front of the inner lens and forms an exterior of the leaning vehicle. The inner lens includes a light-receiving surface, a light-emitting surface, and a tapered part. The light-receiving surface intersects with the optical axis and is curved to be convex toward the LED. The light-emitting surface intersects with the optical axis and is disposed in front of the light-receiving surface. The tapered part connects the light-receiving surface to the light-emitting surface. The inner lens is configured to have a hollow cylindrical shape that tapers toward the front direction such that a width of the light-emitting surface is smaller than a width of the light-receiving surface due to a width of the tapered part continuously decreasing from the light-receiving surface toward the light-emitting surface, and the largest width of the inner lens is longer than a length from a location at which the inner lens has the largest width to the light-receiving surface in a direction along the optical axis.

In the lamp unit described in (1), the inner lens includes the tapered part that tapers toward the front direction of the leaning vehicle. That is, the width of the tapered part does not increase. This configuration helps to increase the incidence angle for the light that has entered the inner lens, which is repeatedly reflected at the interface between the tapered part and the outside. Thus, this configuration facilitates total internal reflection of the light every time the light is incident on the interface and keeps the light from easily escaping to the outside of the inner lens. In other words, the inner lens having such a configuration can efficiently collect light received from the LED. Thus, this configuration eliminates the need to increase the size of the inner lens for a larger incidence angle and enables emission of a desired amount of light even with fewer LEDs. It is therefore possible to increase the visibility of the leaning vehicle while suppressing both upsizing of the lamp unit and an increase in the number of LEDs.

(2) In the lamp unit described in (1), the largest width of the inner lens may be shorter than a length from the light-receiving surface to the light-emitting surface in the direction along the optical axis.

In the lamp unit described in (2), the inner lens is elongated in a direction from the light-receiving surface toward the light-emitting surface. The width of the tapered part therefore decreases gradually, further helping to increase the incidence angle of light incident on the interface of the tapered part. The inner lens can therefore collect light received from the LED more efficiently.

(3) In the lamp unit described in (1) or (2), the light-emitting surface may have a step.

The light emitted by the LED enters the inner lens through the light-receiving surface, passes along the tapered part, and is emitted from the light-emitting surface. According to the lamp unit described in (3), the light emitted from the light-emitting surface of the inner lens is easily diffused. The visibility of the leaning vehicle therefore further increases.

(4) In the lamp unit described in any one of (1) to (3), the light-emitting surface may have an annular shape in a front view of the leaning vehicle, and have a plurality of steps, each step receding toward the light-receiving surface, from the outside of the light-emitting surface toward the inside of the light-emitting surface.

According to the lamp unit described in (4), the light emitted from the light-emitting surface of the inner lens is easily diffused. Furthermore, to people who see the leaning vehicle, an annular-shape-emitting light is seen. The visibility of the leaning vehicle therefore further increases.

(5) The lamp unit described in any one of (1) to (4) may include a plurality of LEDs arranged in an annular array in a front view of the leaning vehicle.

Since the lamp unit described in (5) includes the plurality of LEDs, the lamp unit can provide an increased amount of light. The visibility of the leaning vehicle therefore is further increased.

(6) In the lamp unit described in (5), the light-receiving surface may extend in the annular array direction of the plurality of LEDs.

According to the lamp unit described in (6), the inner lens can receive light emitted by all of the LEDs. Even in a case where the lamp unit includes a plurality of LEDs, the inner lens can efficiently collect light received from all of the LEDs.

(7) In the lamp unit described in any one of (1) to (6), the tapered part may have a gradient relative to the front direction of the leaning vehicle, the gradient allowing an incident angle of light on a surface of the tapered part to be greater than a critical angle, the light being in the inner lens after coming through the light-receiving surface, the critical angle being a threshold angle allowing a total internal reflection to be made on a surface of the tapered part.

In the lamp unit described in (7), total internal reflection of light that entered into the inner lens is made on a surface of the tapered part (at the interface with the outside). The inner lens can therefore more efficiently collect light received from the LED.

(8) In the lamp unit described in any one of (1) to (7), the leaning vehicle may be a straddled vehicle.

(9) A leaning vehicle according to the present invention includes the lamp unit described in any one of (1) to (8).

The "leaning vehicle" is a machine for transport. The leaning vehicle is manned or unmanned. The leaning vehicle is, for example, a straddled vehicle. The straddled vehicle refers to a vehicle whose driver straddles a saddle thereof when seated. The leaning vehicle is, for example, a motorcycle or a motor tricycle. No particular limitations are placed on the motorcycle, and examples thereof include scooters, mopeds, off-road motorcycles, and on-road motorcycles. The straddled vehicle is not limited to motorcycles, and may be, for example, any vehicle such as an ATV (All-Terrain Vehicle). The leaning vehicle is not limited to straddled vehicles, and may be, for example, a three-wheel vehicle or a four-wheel vehicle having a cabin. The leaning vehicle having a cabin may include, for example, a seat for a driver to sit on without straddling the vehicle.

The leaning vehicle is configured to turn with a vehicle body thereof leaning. The leaning vehicle is configured to turn along a curve with a posture thereof leaning toward the inside of the curve in order to counter centrifugal force exerted on the leaning vehicle during the turn. The leaning vehicle may have, for example, two front wheels as steerable wheels. The leaning vehicle may have, for example, one or two rear wheels as drive wheels. The leaning vehicle has, for example, a handlebar. The leaning vehicle is, for example, configured to turn through posture control involving weight shifting of a rider thereon. With respect to the leaning vehicle, there is a strong demand for downsizing of the vehicle. It is therefore preferable to suppress upsizing of a lamp unit that is mounted to the leaning vehicle.

The "lamp unit" functions as, for example, a headlamp unit of a leaning vehicle. At least a portion of the lamp unit is exposed to the outside of the leaning vehicle. The portion exposed to the outside of the leaning vehicle herein refers to, for example, a portion visible from a location in front of the leaning vehicle. The lamp unit is, for example, disposed in front of a steering of the leaning vehicle. No particular limitations are placed on the number of lamp units provided in one leaning vehicle; the leaning vehicle may be provided with one lamp unit or a plurality of lamp units. The lamp unit is an assembly of a plurality of modules.

The lamp unit comprises a vehicle visibility lamp. The vehicle visibility lamp has a function of increasing the visibility of the leaning vehicle to others by illuminating at least one of a front region, a left region, or a right region of the leaning vehicle. Examples of vehicle visibility lamps include a daytime running lamp and a position lamp. The vehicle visibility lamp may function either as a daytime running lamp or as a position lamp. The vehicle visibility lamp may function both as a daytime running lamp and as a position lamp. In this case, the leaning vehicle is provided with a switch for switching between the daytime running lamp and the position lamp. The daytime running lamp and the position lamp are examples of the vehicle visibility lamp.

The lamp unit may comprise, for example, an auxiliary headlamp. The auxiliary headlamp illuminates an area ahead of the leaning vehicle, and thus functions as a complement to the headlamp. Examples of auxiliary headlamps include a fog lamp and a cornering lamp. The fog lamp plays a role as a complement to the headlamp when, for example, the visual range is reduced. The cornering lamp is turned on when the leaning vehicle turns, to illuminate an area in a direction of the turn.

The "LED" is, for example, disposed with an emission surface thereof facing in a front direction of the leaning vehicle. The LED is, for example, disposed with an optical axis thereof extending along a front-back direction of the leaning vehicle. The lamp unit may include one LED or a plurality of LEDs. The LED emits, for example, white light. The LED may emit light other than white light, such as yellow light, depending on the intended use. The LED has, for example, a color temperature of 5,000 to 6,000 K (Kelvin) in the case of white light and a color temperature of 2,700 to 3,000 K in the case of yellow light. The LED has, for example, a luminous intensity of less than or equal to 1,200 cd (candela) in the case of the daytime running lamp, the fog lamp, or the cornering lamp, and a luminous intensity of less than or equal to 40 cd in the case of the position lamp.

The "optical axis" of the LED is an imaginary axis extending from the center of the emission surface of the LED in a direction perpendicular to the emission surface. The optical axis is, for example, coincident or substantially coincident with the front-back direction of the leaning vehicle. The luminous intensity of the LED is maximum on the optical axis when the LED emits light to a plane parallel to the emission surface. Note that the term "substantially coincident" suggests that design tolerances and/or manufacturing inaccuracies can, to a degree, be tolerated. In a configuration in which the lamp unit has a plurality of LEDs, directions of the optical axes of the respective LEDs do not necessarily have to be the same. In a configuration in which the lamp unit has a plurality of LEDs, the inner lens has a plurality of optical axis-passing portions. In this case, the inner lens may meet requirements for an inner lens as set forth in the appended claims in at least one optical axis-passing portion, or may meet the requirements in all the optical axis-passing portions. The optical axis of the LED extends straight without being reflected by any reflectors, and intersects with the light-receiving surface, the light-emitting surface, and an outer cover in the stated order.

The "inner lens" functions as a light guide that causes light received from the LED to be emitted in a desired direction. The inner lens has a frustum shape. The inner lens has a frusto-conical shape. The inner lens is, for example, disposed, so that a height direction of the frustum matches or substantially matches the front-back direction of the leaning vehicle. The inner lens has, in the center thereof, a through hole that extends in the front-back direction. That is, the inner lens has a hollow cylindrical shape that tapers toward the front direction. For example, the inner lens may have a hollow polygonal cylindrical shape or a hollow circular cylindrical shape that tapers toward the front direction. The inner lens may alternatively have a shape obtained by cutting out a portion of a tapered hollow cylindrical shape. For example, the inner lens may have a circular arc shape in a front view. The lamp unit may have one inner lens or a plurality of inner lenses. The inner lens is, for example, made from organic glass such as acrylic resin or polycarbonate.

The "width" of the inner lens refers to, for example, a length in a direction perpendicular to the optical axis of the LED in a cross-sectional view taken through one plane including the optical axis. The inner lens meets, for example, the requirements for an inner lens as set forth in the appended claims in a cross-sectional view taken through one plane including the optical axis of the LED. In a case where the inner lens has a hollow cylindrical shape in a front view of the leaning vehicle, for example, the width of the inner lens refers to a length in a radial direction of the inner lens.

The "light-receiving surface" constitutes a back surface of the inner lens. The light-receiving surface directly receives light emitted by the LED. The light-receiving surface receives light that arrives from the LED without being reflected or refracted. The light-receiving surface is a convex surface that protrudes toward the LED. The light-receiving surface has, for example, an aspherical shape. The light-receiving surface may alternatively have a spherical shape. In this case, at least a portion of the light-receiving surface has a shape obtained by cutting out a portion of a surface of a sphere, and has an area smaller than a hemispherical surface. If the light-receiving surface has a tangent line that forms an angle relative to a direction perpendicular to the optical axis of the LED in a cross-sectional view taken through one plane including the optical axis, the angle is equal to or less than 45 degrees. The light-receiving surface is, for example, included within an imaginary circle that is imaginarily drawn in the location at which the inner lens has the largest width and that has the largest width as a diameter in a cross-sectional view taken through one plane including the optical axis of the LED. The width of the light-receiving surface corresponds to the largest width of the inner lens, for example, when the inner lens is seen from a location in back of the inner lens. A distance between the light-receiving surface and the LED on the optical axis is, for example, shorter than the largest width of the inner lens. A distance between the location at which the inner lens has the largest width and the LED on the optical axis is, for example, shorter than a distance between the location at which the inner lens has the largest width and the light-emitting surface on the optical axis. In a case where one end point and an opposite end point that correspond to the largest width of the inner lens have vertices in the width direction that meet the optical axis, the locations can be different in the front-back direction of the optical axis. In this case, the location at which the inner lens has the largest width may be defined as a location including the end point closer to the LED, the end point being either of the one end point or the opposite end point. In a case where there are a plurality of locations identifiable as the location at which the inner lens has the largest width, any one of the locations that is closest to the LED may be defined as the location at which the inner lens has the largest width.

The "light-emitting surface" constitutes a front surface of the inner lens. The light-emitting surface is visible when the lamp unit is seen from the front. The light-emitting surface emits light received by the light-receiving surface in at least one of the front direction, an up direction, a down direction, a left direction, or a right direction. The light-emitting surface may be a flat surface or have a step. The light-emitting surface may have one step or a plurality of steps. The width of the light-emitting surface corresponds, for example, to the width of a surface through which light passes from the inside of the inner lens to the outside of the inner lens when the inner lens is seen from a location in front of the inner lens. The light-emitting surface may span a plurality of locations along the optical axis or in the front-back direction of the leaning vehicle. In a case where the light-emitting surface has steps, portions corresponding to the respective steps can be in different locations in the front-back direction. In such a case, a 'front-most location of all' can be defined as the position of the light-emitting surface in the front-back direction.

The "tapered part" constitutes a portion of the inner lens between the light-receiving surface and the light-emitting surface. The tapered part collects light received by the light-receiving surface and guides the light to the light-emitting surface. The tapered part has a width that narrows from the light-receiving surface toward the light-emitting surface. The tapered part may include a portion having a constant thickness as long as the tapered part does not widen at any point between the light-receiving surface and the light-emitting surface in a cross-sectional view taken through one plane including the optical axis. Since the inner lens has a hollow cylindrical shape that tapers toward the front direction, the tapered part includes an outer circumferential surface and an inner circumferential surface. The outer circumferential surface and the inner circumferential surface totally or substantially totally reflect light, which comes from the light-receiving surface and is incident on the tapered part, to collect the reflected light in the front direction. The outer circumferential surface and the inner circumferential surface each have a gradient of, for example, greater than or equal to 0 degrees and less than or equal to 10 degrees relative to the front direction. Preferably, the upper limit of the gradient is less than or equal to 8 degrees. More preferably, the upper limit of the gradient is less than or equal to 4 degrees. The gradients of the outer circumferential surface and the inner circumferential surface may each be constant or may vary. The gradient of the outer circumferential surface may be the same or different from that of the inner circumferential surface. In a case where the inner lens has a solid frustum shape, the tapered part only has the outer circumferential surface described above.

The "outer cover" covers, for example, at least the light-emitting surface of the inner lens. The outer cover may cover the light-emitting surface and the tapered part of the inner lens. The outer cover directly receives light emitted from the inner lens. The outer cover receives light that is emitted from the inner lens and that arrives without being reflected or refracted. The outer cover has neither a lens function nor a reflector function. The outer cover has, for example, a transparent color.

The above and other aims, features, aspects, and advantages of the present teaching will become more apparent from the following detailed description of some embodiments of the present invention given with reference to the accompanying drawings.

As used herein, the term "and/or" includes any and all combinations of one or more of the associated listed items. As used herein, the terms "including", "comprising", or "having", and variations thereof specify the presence of stated features, steps, operations, elements, components, and/or equivalents thereof, and can include one or more of steps, operations, elements, components, and/or their groups.

Unless otherwise defined, all terms (including technical and scientific terms) used herein have the same meaning as commonly understood by one of ordinary skill in the art to which the present teaching belongs. It will be understood that terms, such as those defined in commonly used dictionaries, should be interpreted as having a meaning that is consistent with their meaning in the context of the present invention and relevant art and should not be interpreted in an idealized or overly formal sense unless expressly so defined herein.

In the description given below, for the purposes of explanation, numerous specific details are set forth in order to provide a thorough understanding of the present invention. It will be apparent, however, that those skilled in the art may practice the present invention without these specific details, as long as it is still covered by the scope of the appended claims.

### Advantageous Effects of Invention

The present invention allows for increased visibility of a leaning vehicle while suppressing upsizing of a lamp unit and an increase in the number of LEDs.

### Brief Description of Drawings

[FIG. 1(a)] A side view of a leaning vehicle according to an embodiment.
[FIG. 1(b)] An exploded perspective view of one module included in a lamp unit according to the embodiment.
[FIG. 1(c)] A perspective view of an inner lens.
[FIG. 1(d)] A cross-sectional view of the inner lens as taken through a plane including an optical axis.
[FIG. 2(a)] A perspective view of the lamp unit according to the embodiment.
[FIG. 2(b)] An exploded perspective view of the lamp unit according to the embodiment.
[FIG. 3] A cross-sectional view of the lamp unit according to the embodiment as taken through a plane including an up-down direction and a front-back direction.
[FIG. 4] A front view of the lamp unit according to the embodiment. Description of Embodiments

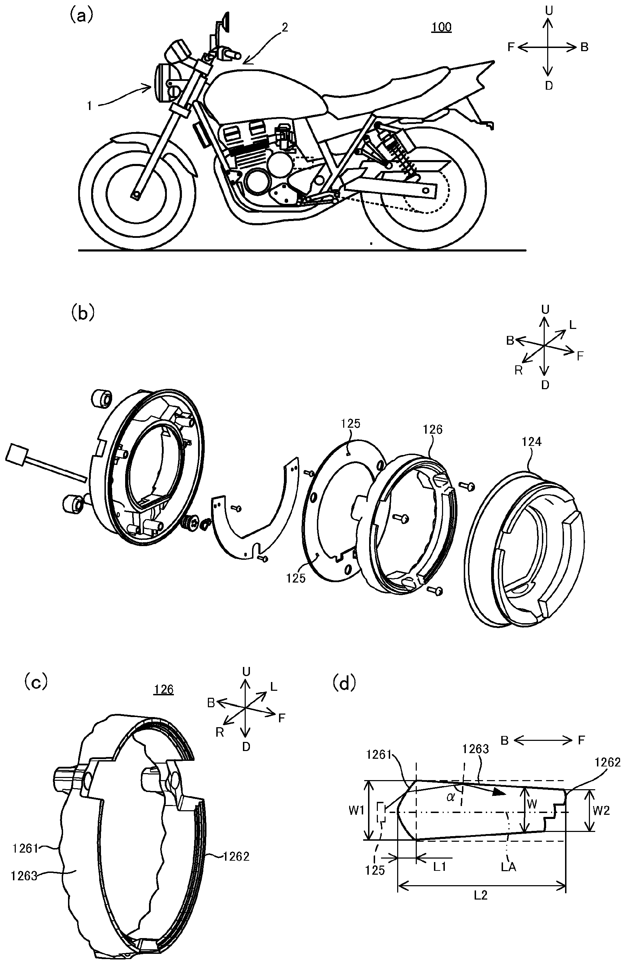

Referring to FIGS. 1(a) to 1(d), the following schematically describes a leaning vehicle and a lamp unit according to an embodiment of the present invention.

FIG. 1(a) is a side view of the leaning vehicle according to the present embodiment. A leaning vehicle 100 is, for example, a motorcycle. The motorcycle is an example of straddled vehicles. The leaning vehicle 100 includes a lamp unit 1 and a vehicle body 2.

The lamp unit 1 has, for example, a substantially cannonball-like shape. The lamp unit 1 functions as, for example, a headlamp unit. The lamp unit 1 is composed of a combination of a plurality of modules. The lamp unit 1 is attachable to and detachable from the leaning vehicle 100 as a single unit without the need to remove any of the modules. The lamp unit 1 is attached to a front portion of the leaning vehicle 100. The lamp unit 1 is, for example, attached to the vehicle body 2 with a bracket therebetween. At least a portion of the lamp unit 1 is exposed to the outside of the leaning vehicle 100.

FIG. 1(b) is an exploded perspective view of one module included in the lamp unit according to the present embodiment. The lamp unit 1 includes a plurality of LEDs 125, an inner lens 126, and an outer cover 124. The plurality of LEDs 125 are arranged in an annular array. The plurality of LEDs 125 are arranged at regular intervals in an array direction. The inner lens 126 is disposed in front of the plurality of LEDs 125 and has a hollow cylindrical shape that tapers toward a front direction F of the leaning vehicle 100. At least a portion of the outer cover 124 is disposed in front of the inner lens 126 and forms an exterior of the leaning vehicle 100. At least a portion of the outer cover 124 forms a front face of the outer cover 124. At least a portion of the outer cover 124 is configured to receive light emitted in the front direction F from the inner lens 126 without aid of any reflectors, and transmit the light in the front direction F.

FIG. 1(c) is a perspective view of the inner lens. The inner lens 126 has a tapered hollow cylindrical shape. The inner lens 126 includes a light-receiving surface 1261, a light-emitting surface 1262, and a tapered part 1263. The inner lens 126 is disposed with the light-receiving surface 1261 facing in a back direction B.

FIG. 1(d) is a cross-sectional view of the inner lens as taken through a plane including an optical axis. The light-receiving surface 1261 intersects with the optical axis LA and is curved to be convex toward the LEDs 125. The light-receiving surface 1261 extends in the array direction of the plurality of LEDs 125.

The light-emitting surface 1262 intersects with the optical axis LA and is disposed in front of the light-receiving surface 1261 in the front direction F. The light-emitting surface 1262 has an annular shape in a front view of the leaning vehicle 100. The light-emitting surface 1262 has a plurality of steps, each step receding toward the light-receiving surface, from the outside of the light-emitting surface toward the inside of the light-emitting surface 1262.

The tapered part 1263 connects the light-receiving surface 1261 and the light-emitting surface 1262 together. The tapered part 1263 has a gradient relative to the front direction F of the leaning vehicle 100, the gradient allowing an incident angle α of light on a surface of the tapered part to be greater than a critical angle, the light being in the inner lens after coming through the light-receiving surface 1261, the critical angle being a threshold angle allowing a total internal reflection to be made on an outer circumferential surface and an inner circumferential surface of the tapered part 1263. Note that the critical angle depends on, for example, the material of the inner lens 126.

The inner lens 126 is configured such that a width W2 of the light-emitting surface 1262 is smaller than a width W1 of the light-receiving surface 1261 due to a width W of the tapered part 1263 continuously decreasing from the light-receiving surface 1261 toward the light-emitting surface 1262, and the largest width of the inner lens 126 (width W1 of the light-receiving surface) is longer than a length L1 from a location at which the inner lens 126 has the largest width to the light-receiving surface 1261 in a direction along the optical axis LA. The largest width of the inner lens 126 (width W1 of the light-receiving surface) is shorter than a length L2 from the light-receiving surface 1261 to the light-emitting surface 1262 in the direction along the optical axis LA. Note that in the present embodiment, the optical axis LA is parallel to the front-back direction of the leaning vehicle 100.

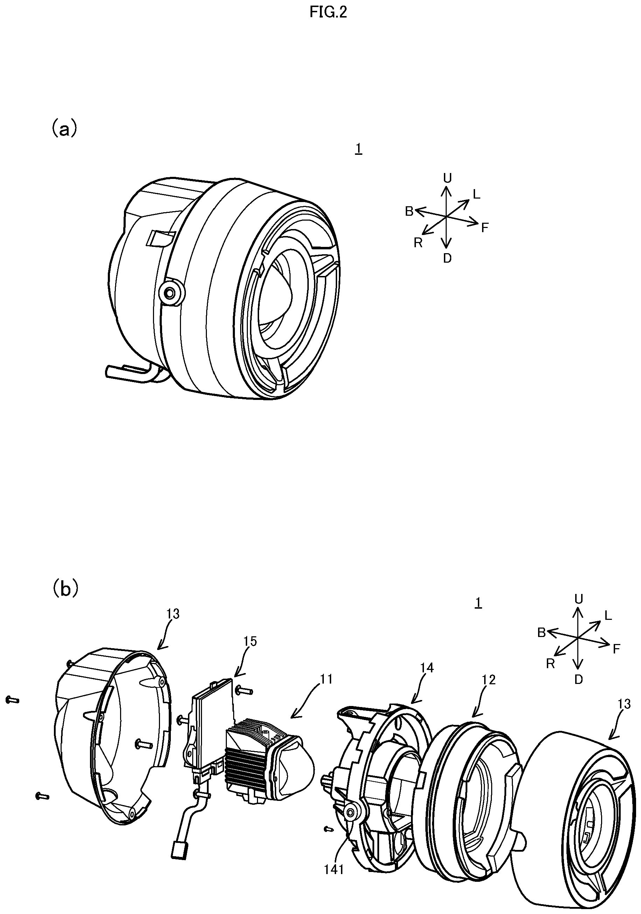

The module shown in FIG. 1(b) is, for example, combined with other modules to form a single lamp unit as shown in FIG. 2(a).

FIG. 2(b) is an exploded perspective view of the lamp unit according to the present embodiment. The lamp unit 1 includes a headlamp module 11, a sub-lamp module 12, a cover module 13, a support member 14, and an electric power supply module 15.

The headlamp module 11 has a function of illuminating an area ahead of the leaning vehicle 100 to increase frontward visibility for a rider. The headlamp module 11 has a substantially box-like shape. The headlamp module 11 includes a headlamp LED. The headlamp LED is contained in a casing, and the interior of the casing is substantially sealed. That is, the headlamp module 11 has a waterproof structure. The waterproof structure refers to a structure that protects an object from liquid, such as water, entering so that no function of the object is compromised. By contrast, a non-waterproof structure, which is described below, refers to any structure other than the waterproof structure described above.

The sub-lamp module 12 is an example of the module shown in FIG. 1(b). The sub-lamp module 12 has a substantially annular shape in a front view. The sub-lamp module 12 includes the above-described LEDs. Hereinafter, LEDs included in the sub-lamp module 12 are referred to as sub-lamp LEDs. The sub-lamp LEDs are contained in a casing, and the interior of the casing is substantially sealed. That is, the sub-lamp module 12 has a waterproof structure.

The cover module 13 has a substantially circular cylindrical box-like shape. The cover module 13 covers at least a portion of the headlamp module 11 and at least a portion of the sub-lamp module 12. In such a state, at least a portion of a front face of the headlamp module 11 and at least a portion of a front face of the sub-lamp module 12 are visible from a location in front of the leaning vehicle 100. The cover module 13 has a non-waterproof structure.

The support member 14 has an attachment part 141 to be attached to the vehicle body 2. The support member 14 is configured to expose at least a portion of the attachment part 141 to the outside of the cover module 13 for the attachment of the attachment part 141 to the vehicle body 2. The support member 14 individually supports all of the headlamp module 11, the sub-lamp module 12, the cover module 13, and the electric power supply module 15.

The electric power supply module 15 has a substantially box-like shape. The electric power supply module 15 supplies electric power to the headlamp module 11. The electric power supply module 15 may supply electric power both to the headlamp module 11 and to the sub-lamp module 12, or may only supply electric power either to the headlamp module 11 or to the sub-lamp module 12. The electric power supply module 15 is connected to a power source device such as a battery and regulates, for example, voltage and current to be supplied to the headlamp module 11. Electrical components of the electric power supply module 15 are contained in a casing, and the interior of the casing is substantially sealed. That is, the electric power supply module 15 has a waterproof structure.

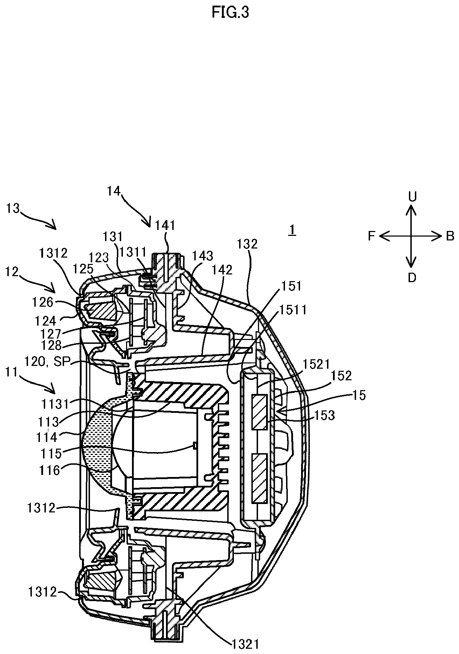

Referring to FIG. 3, the following describes the modules of the lamp unit according to the present embodiment in more detail. FIG. 3 is a cross-sectional view of the lamp unit according to the present embodiment as taken through a plane including an up-down direction UD and a front-back direction FB. Note that the up-down direction UD, the front-back direction FB, and a left-right direction LR are defined with reference to the leaning vehicle 100 in an upright state with the lamp unit 1 mounted thereto.

The headlamp module 11 includes a housing 113, an outer lens 114, a headlamp LED 115, and an inner lens 116.

The housing 113 has a substantially box-like shape having an opening part 1131 in a front face thereof. More specifically, the housing 113 has a substantially hat-like shape in a cross-sectional view along the up-down direction UD and the front-back direction FB.

The outer lens 114 is disposed in front of the housing 113 in the front direction F. The outer lens 114 has a substantially dome-like shape. The outer lens 114 is, for example, a plano-convex lens. The outer lens 114 is disposed with a convex surface thereof facing in the front direction F. The outer lens 114 is attached to the housing 113 using, for example, screws or an adhesive. The outer lens 114, together with the housing 113, forms the casing. The interior of this casing is substantially sealed, so that the casing has a waterproof structure. The headlamp LED 115 and the inner lens 116 are contained inside the casing.

The headlamp LED 115 is attached to a substrate, which is not shown. The headlamp LED 115 is disposed with an emission surface thereof facing in the front direction F. The headlamp LED 115 emits, for example, white light in the front direction F. The headlamp LED 115 has, for example, a color temperature of 5,000 to 6,000 K. The headlamp LED 115 has, for example, a luminous intensity of greater than or equal to 15,000 cd.

The inner lens 116 is disposed between the headlamp LED 115 and the outer lens 114. The inner lens 116 is, for example, a plano-convex lens. The inner lens 116 is disposed with a convex surface thereof facing in the front direction F. The inner lens 116, together with the outer lens 114, collects light emitted from the headlamp LED 115 to form a desired illumination area.

The sub-lamp module 12 is disposed to surround the headlamp module 11. The sub-lamp module 12 has a cavity part 120 around the center thereof. The headlamp module 11 is disposed in the cavity part 120. More specifically, the sub-lamp module 12 surrounds, for example, the outer lens 114 of the headlamp module 11. The sub-lamp module 12 and the headlamp module 11 have a space SP therebetween. The space SP spans the entire perimeter of the headlamp module 11 in a front view.

According to the present embodiment, the sub-lamp module 12 functions as a daytime running lamp and a position lamp. A selector switch, which is not shown, controls switching of the sub-lamp module 12 between functioning as a daytime running lamp and functioning as a position lamp. The selector switch is, for example, provided on a steering of the leaning vehicle 100.

The sub-lamp module 12 includes a housing 123, the outer cover 124, the sub-lamp LEDs 125, the inner lens 126, a control board 127, and an LED substrate 128.

The housing 123 has a substantially annular shape having an opening part in a front face thereof. The annular shape of the housing 123 is a substantially hat-like shape in a cross-sectional view along the up-down direction UD and the front-back direction FB.

The outer cover 124 is disposed in front of the housing 123 in the front direction F. The outer cover 124 has a substantially hollow cylindrical shape having an opening part in a back face thereof. The outer cover 124 has a transparent color as a whole. The outer cover 124 is attached to the housing 123 using, for example, screws or an adhesive. The outer cover 124, together with the housing 123, forms the casing. The interior of this casing is substantially sealed, so that the casing has a waterproof structure. The control board 127, the sub-lamp LEDs 125, the inner lens 126, and the LED substrate 128 are contained inside the casing.

The control board 127 is attached to the housing 123. The control board 127 is electrically connected to a power source device such as a battery, which is not shown, and to the LED substrate 128. The control board 127 supplies electric power to the sub-lamp LEDs 125. The control board 127 adjusts the luminous intensity of the sub-lamp LEDs 125 in response to a signal from the selector switch, which is not shown. The LED substrate 128 and the sub-lamp LEDs 125 are disposed in front of the control board 127 in the front direction F.

The sub-lamp LEDs 125 are attached to the LED substrate 128. The sub-lamp LEDs 125 are each disposed with an emission surface thereof facing in the front direction F. The sub-lamp LEDs 125 emit, for example, white light in the front direction F. The sub-lamp LEDs 125 have, for example, a color temperature of 5,000 K. The sub-lamp LEDs 125 have, for example, a luminous intensity of 1,000 cd in the case of the daytime running lamp and a luminous intensity of 30 cd in the case of the position lamp. The luminous intensity of the sub-lamp LEDs 125 is lower than the luminous intensity of the headlamp LED 115.

The inner lens 126 is disposed between the sub-lamp LEDs 125 and the outer cover 124. The details of the inner lens 126 are the same as those described with reference to FIGS. 1(c) and 1(d), and will therefore be omitted.

The cover module 13 includes a front cover 131 and a back cover 132.

The front cover 131 has a substantially cylindrical box-like shape having an opening part 1311 in a back face thereof. The front cover 131 covers left, right, top, bottom, and front faces of the headlamp module 11, but does not cover a back face of the headlamp module 11. The front cover 131 covers circumferential surfaces and the front face of the sub-lamp module 12, but does not cover a back face of the sub-lamp module 12.

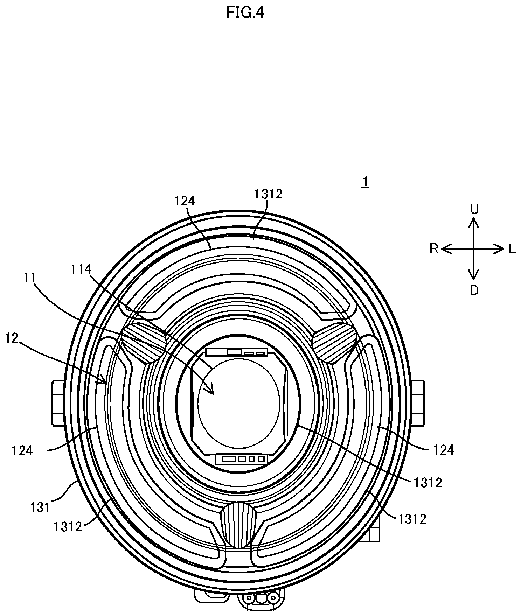

FIG. 4 is a front view of the lamp unit according to the present embodiment. The front cover 131 has a plurality of opening parts 1312 in a front face thereof. In a front view of the lamp unit 1, the outer lens 114 of the headlamp module 11 and the outer cover 124 of the sub-lamp module 12 are disposed in the plurality of opening parts 1312. Thus, at least a portion of the headlamp module 11 and at least a portion of the sub-lamp module 12 are visible from a location in front of the leaning vehicle 100.

Referring to FIG. 3, the back cover 132 is disposed in back of the front cover 131 in the back direction B. The back cover 132 has a substantially cylindrical box-like shape having an opening part 1321 in a front face thereof. The back cover 132, together with the front cover 131, covers at least a portion of the headlamp module 11 and at least a portion of the sub-lamp module 12. More specifically, the back cover 132 and the front cover 131 cover a portion other than the front face of the headlamp module 11 and a portion other than the front face of the sub-lamp module 12.

The electric power supply module 15 is disposed in back of the headlamp module 11 in the back direction B. The electric power supply module 15 includes a front case 151, a back case 152, and a control board 153.

The front case 151 has a substantially box-like shape having an opening part 1511 in a back face thereof. More specifically, the front case 151 has a substantially hat-like shape in a cross-sectional view along the up-down direction UD and the front-back direction FB.

The back case 152 is disposed in back of the front case 151 in the back direction B. The back case 152 has a substantially box-like shape having an opening part 1521 in a front face thereof. More specifically, the back case 152 has a substantially hat-like shape in a cross-sectional view along the up-down direction UD and the front-back direction FB. The back case 152 is attached to the front case 151 using, for example, screws or an adhesive.

The back case 152, together with the front case 151, forms the casing. The interior of this casing is substantially sealed, so that the casing has a waterproof structure. The control board 153 is contained inside the casing.

The headlamp module 11, the sub-lamp module 12, the electric power supply module 15, and the cover module 13 described above are each attached to the support member 14.

The support member 14 is disposed in back of the sub-lamp module 12 in the back direction B and in front of the back cover 132 in the front direction F. The support member 14 directly supports the headlamp module 11, the sub-lamp module 12, the electric power supply module 15, and the cover module 13. The support member 14 includes a cylindrical part 142 and a disk part 143.

The cylindrical part 142 has a substantially hollow cylindrical shape. At least a portion of the headlamp module 11 is disposed inside the cylindrical part 142.

The disk part 143 has a substantially disk-like shape having a hole in a central portion thereof. An inner circumferential surface of the disk part 143 is connected to an outer circumferential surface of the cylindrical part 142. That is, the support member 14 has a shape in which the cylindrical part 142 is fitted into the hole of the disk part 143. The disk part 143 is integral with the cylindrical part 142.

The inner lens 126 in the lamp unit 1 according to the present embodiment includes the tapered part 1263 that tapers toward the front direction of the leaning vehicle 100. This configuration helps to increase the incidence angle α for light that has entered the inner lens 126, which is incident on the interface between the tapered part 1263 and the outside. Thus, this configuration facilitates repeated total reflection of the light at the interface and keeps the light from easily escaping to the outside of the inner lens 126. In other words, the inner lens 126 having such a configuration can efficiently collect light received from the LEDs 125. Thus, this configuration eliminates the need to increase the size of the inner lens 126 for a larger incidence angle and enables emission of a desired amount of light even with fewer LEDs. It is therefore possible to increase the visibility of the leaning vehicle 100 while suppressing upsizing of the lamp unit 1 and an increase in the number of LEDs.

In the case of the embodiment described above, the lamp unit 1 includes the headlamp module 11, the cover module 13, the support member 14, and the electric power supply module 15. However, the lamp unit 1 does not have to include all of these modules. For example, the headlamp module 11 may be provided in a separate location from the lamp unit 1. The electric power supply module 15 may be attached to the vehicle body 2.

In the case of the embodiment described above, the light-emitting surface 1262 of the inner lens 126 has a series of steps. However, the light-emitting surface 1262 may be a flat surface with no steps.

In the case of the embodiment described above, the sub-lamp module 12 includes a plurality of LEDs 125. However, the sub-lamp module 12 may include only one sub-lamp LED 125.

### Reference Signs List

- 100: leaning vehicle
- 1: lamp unit
- 11: headlamp module
- 113: housing
- 1131: opening part
- 114: outer lens
- 115: LED
- 116: inner lens
- 12: sub-lamp module
- 120: cavity part
- 123: housing
- 124: outer cover
- 125: LED
- 126: inner lens
- 1261: light-receiving surface
- 1262: light-emitting surface
- 1263: tapered part
- 127: control board
- 128: LED substrate
- 13: cover module
- 131: front cover
- 1311,1312: opening part
- 132: back cover
- 1321: opening part
- 14: support member
- 141: attachment part
- 142: cylindrical part
- 143: disk part
- 15: electric power supply module
- 151: front case
- 1511: opening part
- 152: back case
- 1521: opening part
- 153: control board
- 2: vehicle body
- LA: optical axis
- SP: space
- W: width of tapered part
- W1: width of light-receiving surface (largest width of inner lens)
- W2: width of light-emitting surface
- α: incidence angle

## Claims

1. A lamp unit (1) for attachment to a front portion of a vehicle body (2) of a leaning vehicle (100), the lamp unit (1) comprising:
a vehicle visibility lamp,
the vehicle visibility lamp including:
an LED (125) configured to emit light in such a direction that an optical axis (LA) of the light extends in a front direction of the leaning vehicle (100);
an inner lens (126) disposed in front of the LED (125); and
an outer cover (124) configured to receive the light emitted in the front direction from the inner lens (126) without aid of any reflectors, and transmit the light in the front direction, the outer cover (124) having at least a portion that is disposed in front of the inner lens (126) and forms an exterior of the leaning vehicle (100), wherein
the inner lens (126) is configured to have a hollow cylindrical shape and includes
a light-receiving surface (1261) intersecting with the optical axis (LA) and being curved to be convex toward the LED (125),
a light-emitting surface (1262) intersecting with the optical axis (LA) and being disposed in front of the light-receiving surface (1261), **characterised in that** the inner lens (126) further includes
a tapered part (1263) connecting the light-receiving surface (1261) to the light-emitting surface (1262),
wherein the hollow cylindrical shape tapers toward the front direction such that a width (W2) of the light-emitting surface (1262) is smaller than a width (W1) of the light-receiving surface (1261) due to a width (W) of the tapered part (1263) continuously decreasing from the light-receiving surface (1261) toward the light-emitting surface (1262), and the largest width of the inner lens (126) is longer than a length from a location at which the inner lens (126) has the largest width to the light-receiving surface (1261) in a direction along the optical axis (LA) so that the inner lens (126) collect the light while reflecting the light within the inner lens (126).

2. The lamp unit (1) according to claim 1, wherein
the largest width of the inner lens (126) is shorter than a length from the light-receiving surface (1261) to the light-emitting surface (1262) in the direction along the optical axis (LA).

3. The lamp unit (1) according to claim 1 or 2, wherein
the light-emitting surface (1262) has a step.

4. The lamp unit (1) according to any one of claims 1 to 3, wherein
the light-emitting surface (1262) has an annular shape in a front view of the leaning vehicle (100), and has a plurality of steps, each step receding toward the light-receiving surface (1261), from the outside of the light-emitting surface (1262) toward the inside of the light-emitting surface (1262).

5. The lamp unit (1) according to any one of claims 1 to 4, comprising
a plurality of the LEDs (125) arranged in an annular array in a front view of the leaning vehicle (100).

6. The lamp unit (1) according to claim 5, wherein
the light-receiving surface (1261) extends in the annular array direction of the plurality of LEDs (125).

7. The lamp unit (1) according to any one of claims 1 to 6, wherein
the tapered part (1263) has a gradient relative to the front direction of the leaning vehicle (100), the gradient allowing an incident angle of light on a surface of the tapered part (1263) to be greater than a critical angle, the light being in the inner lens (126) after coming through the light-receiving surface (1261), the critical angle being a threshold angle allowing a total internal reflection to be made on a surface of the tapered part (1263).

8. The lamp unit (1) according to any one of claims 1 to 7, wherein
the leaning vehicle (100) is a straddled vehicle.

9. A leaning vehicle (100) comprising the lamp unit (1) according to any one of claims 1 to 8.

## Patentansprüche

1. Eine Lampeneinheit (1) zur Anbringung an einen vorderen Abschnitt einer Karosserie (2) eines Neigungsfahrzeugs (100), wobei die Lampeneinheit (1) folgende Merkmale aufweist:
eine Fahrzeugsichtbarkeitslampe,
wobei die Fahrzeugsichtbarkeitslampe folgende Merkmale umfasst:
eine LED (125), die dazu konfiguriert ist, Licht in eine solche Richtung zu emittieren, dass sich eine optische Achse (LA) des Lichts in einer Vorne-Richtung des Neigungsfahrzeugs (100) erstreckt;
eine innere Linse (126), die vor der LED (125) angeordnet ist; und
eine Außenabdeckung (124), die dazu konfiguriert ist, das in der Vorne-Richtung von der inneren Linse (126) emittierte Licht ohne Hilfe jeglicher Reflektoren zu empfangen und das Licht in der Vorne-Richtung zu übertragen, wobei die Außenabdeckung (124) zumindest einen Abschnitt aufweist, der vor der inneren Linse (126) angeordnet ist und ein Äußeres des Neigungsfahrzeugs (100) bildet, wobei
die innere Linse (126) dazu konfiguriert ist, eine hohlzylindrische Form aufzuweisen, und folgende Merkmale umfasst:
eine lichtempfangende Oberfläche (1261), die die optische Achse (LA) schneidet und so gekrümmt ist, dass dieselbe zu der LED (125) hin konvex ist,
eine lichtemittierende Oberfläche (1262), die die optische Achse (LA) schneidet und vor der lichtempfangenden Oberfläche (1261) angeordnet ist,
**dadurch gekennzeichnet, dass** die innere Linse (126) ferner folgendes Merkmal umfasst:
einen spitz zulaufenden Teil (1263), der die lichtempfangende Oberfläche (1261) und die lichtemittierende Oberfläche (1262) verbindet,
wobei die hohlzylindrische Form zu der Vorne-Richtung hin derart spitz zuläuft, dass eine Breite (W2) der lichtemittierenden Oberfläche (1262) kleiner ist als eine Breite (W1) der lichtempfangenden Oberfläche (1261), da eine Breite (W) des spitz zulaufenden Teils (1263) kontinuierlich von der lichtempfangenden Oberfläche (1261) hin zu der lichtemittierenden Oberfläche (1262) abnimmt, und die größte Breite der inneren Linse (126) in einer Richtung entlang der optischen Achse (LA) länger ist als eine Länge von einer Stelle, an der die innere Linse (126) die größte Breite aufweist, zu der lichtempfangenden Oberfläche (1261), sodass die innere Linse (126) das Licht sammelt, während das Licht innerhalb der inneren Linse (126) reflektiert wird.

2. Die Lampeneinheit (1) gemäß Anspruch 1, bei der
die größte Breite der inneren Linse (126) in der Richtung entlang der optischen Achse (LA) kürzer ist als eine Länge von der lichtempfangenden Oberfläche (1261) zu der lichtemittierenden Oberfläche (1262).

3. Die Lampeneinheit (1) gemäß Anspruch 1 oder 2, bei der
die lichtemittierende Oberfläche (1262) eine Stufe aufweist.

4. Die Lampeneinheit (1) gemäß einem der Ansprüche 1 bis 3, bei der
die lichtemittierende Oberfläche (1262) in einer Vorderansicht des Neigungsfahrzeugs (100) eine Ringform aufweist und eine Mehrzahl von Stufen aufweist, wobei jede Stufe von der Außenseite der lichtemittierenden Oberfläche (1262) zu der Innenseite der lichtemittierenden Oberfläche (1262) in Richtung der lichtempfangende Oberfläche (1261) zurückgeht.

5. Die Lampeneinheit (1) gemäß einem der Ansprüche 1 bis 4, die folgendes Merkmal aufweist:
eine Mehrzahl von den LEDs (125), die in einer Vorderansicht des Neigungsfahrzeugs (100) in einem ringförmigen Array angeordnet sind.

6. Die Lampeneinheit (1) gemäß Anspruch 5, bei der
sich die lichtempfangende Oberfläche (1261) in der Ringförmiges-Array-Richtung der Mehrzahl von LEDs (125) erstreckt.

7. Die Lampeneinheit (1) gemäß einem der Ansprüche 1 bis 6, bei der
der spitz zulaufende Teil (1263) einen Gradienten relativ zu der Vorne-Richtung des Neigungsfahrzeugs (100) aufweist, wobei der Gradient einem Einfallswinkel des Lichts auf einer Oberfläche des spitz zulaufenden Teils (1263) ermöglicht, größer als ein kritischer Winkel zu sein, wobei sich das Licht nach Durchtreten der lichtempfangenden Oberfläche (1261) in der inneren Linse (126) befindet, wobei der kritische Winkel ein Schwellenwinkel ist, der ermöglicht, dass eine Gesamtinnenreflektion auf einer Oberfläche des spitz zulaufenden Teils (1263) stattfindet.

8. Die Lampeneinheit (1) gemäß einem der Ansprüche 1 bis 7, bei der
das Neigungsfahrzeug (100) ein Spreizsitzfahrzeug ist.

9. Ein Neigungsfahrzeug (100), das die Lampeneinheit (1) gemäß einem der Ansprüche 1 bis 8 aufweist.

## Revendications

1. Unité de lampe (1) destinée à être fixée à une partie avant d'une carrosserie de véhicule (2) d'un véhicule à inclinaison (100), l'unité de lampe (1) comprenant:
une lampe de visibilité de véhicule,
la lampe de visibilité de véhicule comportant:
une LED (125) configurée pour émettre de la lumière dans une direction telle qu'un axe optique (LA) de la lumière s'étende dans une direction avant du véhicule à inclinaison (100);
une lentille intérieure (126) disposée devant la LED (125); et
un couvercle extérieur (124) configuré pour recevoir la lumière émise dans la direction avant depuis la lentille intérieure (126) sans l'aide d'un quelconque réflecteur, et pour transmettre la lumière dans la direction avant, le couvercle extérieur (124) présentant au moins une partie qui est disposée devant la lentille intérieure (126) et qui forme un extérieur du véhicule à inclinaison (100),
dans laquelle
la lentille intérieure (126) est configurée de manière à présenter une forme cylindrique creuse et comporte
une surface de réception de lumière (1261) venant en intersection avec l'axe optique (LA) et étant courbée de manière à être convexe vers la LED (125),
une surface électroluminescente (1262) venant en intersection avec l'axe optique (LA) et étant disposée devant la surface de réception de lumière (1261),
**caractérisée par le fait que** la lentille intérieure (126) comporte par ailleurs
une partie conique (1263) connectant la surface de réception de lumière (1261) à la surface électroluminescente (1262),
dans lequel la forme cylindrique creuse s'effile vers l'avant de sorte qu'une largeur (W2) de la surface électroluminescente (1262) soit inférieure à une largeur (W1) de la surface de réception de lumière (1261) du fait d'une largeur (W) de la partie effilée (1263) qui diminue en continu de la surface de réception de lumière (1261) vers la surface électroluminescente (1262), et que la largeur la plus grande de la lentille intérieure (126) est plus longue qu'une longueur à partir d'un endroit auquel la lentille intérieure (126) présente la largeur la plus grande vers la surface de réception de lumière (1261) dans une direction le long de l'axe optique (LA) de sorte que la lentille intérieure (126) collecte la lumière tout en réfléchissant la lumière dans la lentille intérieure (126).

2. Unité de lampe (1) selon la revendication 1, dans laquelle
la largeur la plus grande de la lentille intérieure (126) est plus courte qu'une longueur de la surface de réception de lumière (1261) à la surface électroluminescente (1262) dans la direction le long de l'axe optique (LA).

3. Unité de lampe (1) selon la revendication 1 ou 2, dans laquelle la surface électroluminescente (1262) présente un gradin.

4. Unité de lampe (1) selon l'une quelconque des revendications 1 à 3, dans laquelle
la surface électroluminescente (1262) présente une forme annulaire en vue de face du véhicule à inclinaison (100), et présente une pluralité de gradins, chaque gradin reculant vers la surface de réception de lumière (1261), de l'extérieur de la surface électroluminescente (1262) vers l'intérieur de la surface électroluminescente (1262).

5. Unité de lampe (1) selon l'une quelconque des revendications 1 à 4, comprenant
une pluralité de LED (125) disposées selon un réseau annulaire en vue de face du véhicule à inclinaison (100).

6. Unité de lampe (1) selon la revendication 5, dans laquelle
la surface de réception de lumière (1261) s'étend dans la direction du réseau annulaire de la pluralité de LED (125).

7. Unité de lampe (1) selon l'une quelconque des revendications 1 à 6, dans laquelle
la partie effilée (1263) présente une pente par rapport à la direction avant du véhicule à inclinaison (100), la pente permettant qu'un angle de lumière incident sur une surface de la partie effilée (1263) soit plus grand qu'un angle critique, la lumière se trouvant dans la lentille intérieure (126) après avoir traversé la surface de réception de lumière (1261), l'angle critique étant un angle seuil permettant de réaliser une réflexion interne totale sur une surface de la partie effilée (1263).

8. Unité de lampe (1) selon l'une quelconque des revendications 1 à 7, dans laquelle
le véhicule à inclinaison (100) est un véhicule à selle.

9. Véhicule à inclinaison (100) comprenant l'unité de lampe (1) selon l'une quelconque des revendications 1 à 8.
